# EUROPEAN PATENT APPLICATION

(11) **EP 4 459 339 A1**
(43) Date of publication of application: **06.11.2024**
(21) Application number: 24172123.2
(22) Date of filing: 24.04.2024
(51) Int. Cl.: G02B 6/293, G02B 6/30, G02B 6/42

(54) **WAVELENGTH MULTIPLEXING OR DEMULTIPLEXING USING A LENS ARRAY WITH AN ANGLED FACET**

(30) Priority: 01.05.2023 US 202318310433
(71) Applicant: Cisco Technology, Inc., San Jose, CA 95134-1706 (US)
(72) Inventor: Bruck, Roman, San Jose (US); Wang, Shawn, San Jose (US); Attila, Mekis, San Jose (US)
(74) Representative: Noble, Nicholas

(57) **Abstract**

Certain embodiments of the present disclosure are directed towards an optical assembly such as a wavelength multiplexers/demultiplexers (MDM). One example optical assembly generally includes: one or more wavelength filters configured to separate a plurality of wavelengths of an optical signal into respective optical signals; and a lens array comprising a first angled facet configured to reflect the optical signal to the one or more wavelength filters, wherein the lens array is configured to receive one or more of the respective optical signals from the one or more wavelength filters and focus the one or more of the respective optical signals before reaching an optical interface for a photonic chip.

## Description

### TECHNICAL FIELD

Embodiments presented in this disclosure generally relate to optic multiplexing/demultiplexing. More specifically, embodiments disclosed herein provide an optic multiplexing/demultiplexing device implemented with a lens array having an angled facet.

### BACKGROUND

Optic multiplexing/demultiplexing devices are important components in optical communication systems. Multiplexing/demultiplexing devices are used to combine or separate multiple optical signals of different wavelengths in a fiber optic cable. This process is important to the efficient use of optical fibers in telecommunications, data center interconnects, and other applications that involve high-bandwidth data transmission.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
Figure 1 is a block diagram illustrating an example multiplexer/demultiplexer (MDM) on a photonic chip, in accordance with certain embodiments of the present disclosure.
Figure 2 illustrates an example MDM having an angled facet in a lens array, in accordance with certain embodiments of the present disclosure.
Figure 3 illustrates an example MDM with an angled facet adjacent to a spacer, in accordance with certain embodiments of the present disclosure.
Figure 4A illustrates an example MDM implemented with a lens array having multiple angled facets, in accordance with certain embodiments of the present disclosure.
Figure 4B illustrates an example MDM implemented with a lens array having multiple angled facets and a silicon spacer, in accordance with certain embodiments of the present disclosure.
Figure 5 is a flow diagram illustrating example operations for optical signal processing, in accordance with certain embodiments of the present disclosure.

To facilitate understanding, identical reference numerals have been used, where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

One embodiment presented in this disclosure provides an optical assembly. The optical assembly generally includes: one or more wavelength filters configured to separate a plurality of wavelengths of an optical signal into respective optical signals; and a lens array comprising a first angled facet configured to reflect the optical signal to the one or more wavelength filters, wherein the lens array is configured to receive one or more of the respective optical signals from the one or more wavelength filters and focus the one or more of the respective optical signals before reaching an optical interface for a photonic chip.

One embodiment presented in this disclosure provides an optical assembly. The optical assembly generally includes: a lens array having a first portion and a second portion, wherein the second portion includes a first angled facet; an optical block; and one or more wavelength filters disposed between the optical block and the first portion of the lens array; and a spacer disposed between the second portion of the lens array and an optical block for a photonic chip.

One embodiment presented in this disclosure provides a method for optical signal processing. The method generally includes: providing, via a fiber array, an optical signal with a plurality of wavelengths to a first angled facet of a lens array; reflecting, via the first angled facet of the lens array, the optical signal to one or more wavelength filters; separating, via the one or more wavelength filters, the plurality of wavelengths into respective optical signals; receiving, via the lens array, one or more of the respective optical signals from the one or more wavelength filters; and focusing, via the lens array, the one or more of the respective optical signals before reaching an optical interface for a photonic chip.

### EXAMPLE EMBODIMENTS

Current telecommunication standards increasingly rely on wavelength division multiplexing to cope with increasing data rates. In some cases, micro-optic multiplexers/demultiplexers (MDMs) implemented externally to a silicon photonic chip may couple wide wavelength windows into silicon photonic chips. MDMs are optical assemblies having small components, which may be held together by epoxy bond lines of small area. An MDM may be designed to provide low production costs and good reliability. The MDM may be integrated into optical transceiver modules. MDM designs adhere to various specifications. For example, an MDM may be designed to have low complexity and part count (e.g., to reduce cost and increase reliability), good mechanical stability and rigidity (e.g., to prevent MDM components from being brought out of alignment by outside forces, shocks, or vibrations), and the ability to integrate into transceiver modules (e.g., by providing a small MDM footprint and height). Additionally, any parts (e.g., fiber array) of the MDM protruding outside the photonic chip may have to have a certain ground clearance to enable the placement of electronic components underneath those parts.

Certain embodiments of the present disclosure are directed towards an MDM implemented with a lens array having an angled facet for redirecting an optical signal. Thus, the MDM may be implemented without a prism for redirecting the optical signal, reducing the part count, complexity, and cost of the MDM. Moreover, in some aspects, the MDM may be implemented with the lens array having the angled facet and a silicon spacer (e.g., as opposed to a glass spacer) below the lens array, allowing for an increased ground clearance for a fiber array protruding from the MDM.

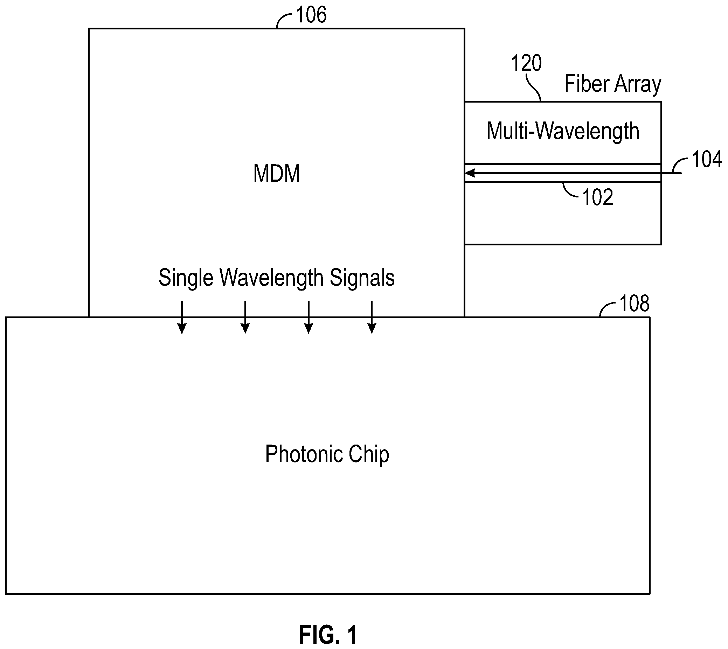

Figure 1 is a block diagram illustrating an example MDM 106 on a photonic chip 108. As shown, a fiber array 120 may be coupled to the MDM 106. An optical signal 104 may be provided to the MDM 106 via a fiber optic cable 102 of the fiber array 120. The optical signal 104 may be a multi-wavelength optical signal. The MDM 106 may split the optical signal to provide multiple optical signals, each having one of the multiple wavelengths of optical signal 104, as shown. To facilitate understanding, the operation of example MDMs may be described herein with respect to separating a multi-wavelength optical signal. However, the MDMs described herein may be used to combine signals in a similar manner.

Transceiver modules are generally densely packed with electronic components. In some implementations, to reduce part count and cost, a single lens array (e.g., a semiconductor lens array) may be used in MDM 106 and a birefringent crystal may be used to provide polarization splitting. However, some MDM implementations with a single lens array and a birefringent crystal may have low ground clearance for the fiber array 120, making integration of the MDM challenging in electronic products having densely packed surface-mounted components. Certain embodiments of the present disclosure are directed to an MDM implemented with an angled (e.g., titled) facet in a lens array, providing greater ground clearance, as described in more detail herein.

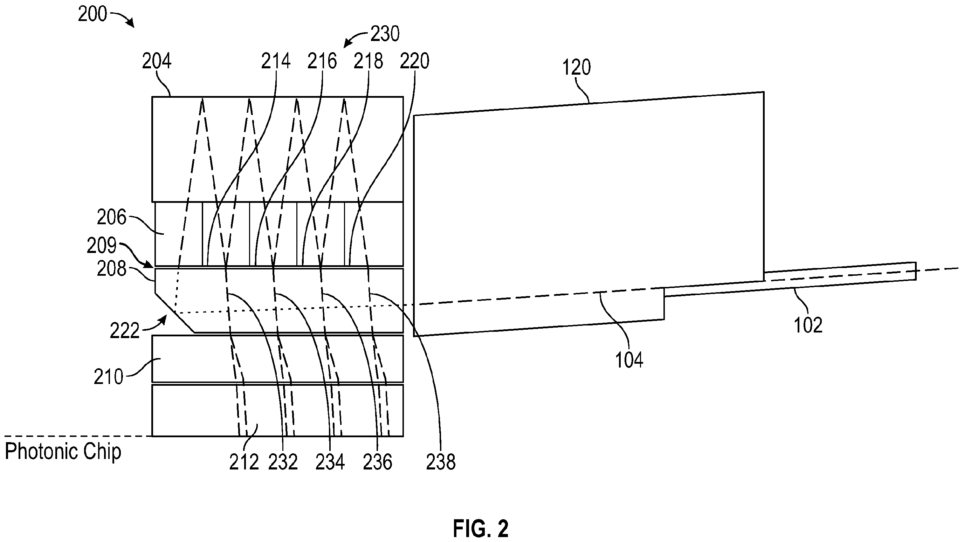

Figure 2 illustrates an example MDM 200 (e.g., corresponding to MDM 106 of Figure 1) having an angled facet 222 in a lens array 208, in accordance with certain embodiments of the present disclosure. In some embodiments, the lens array 208 may be a semiconductor (e.g., silicon) lens array. Light incident onto the photonic chip may travel with a slight tilt (e.g., 8°) (e.g., with respect to a vertical axis) for good coupling from the MDM to the photonic chip. On the other hand, the fiber interface (e.g., fiber optics cable 102) may have a near-horizontal orientation to facilitate a fit of the MDM in a transceiver module housing which may have a height constraint. Thus, the MDM 200 changes the propagation direction of the received optical signal 104.

In some embodiments of the present disclosure, the optical signal 104 from the fiber array 120 may be provided to the lens array 208 having the angled facet 222 that changes the propagation direction of the optical signal 104, as shown. For example, the propagation direction of the optical signal 104 may be changed so that the optical signal 104 is provided to an optical block 204. In some embodiments, a spacer 206 (e.g., glass spacer) may be disposed between the lens array 208 and the optical block 204 such that the optical signal is provided from the lens array 208 to the optical block 204 through the spacer 206, as shown. A lens below the spacer 206 may be used to collimate the optical signal 104 before the optical signal 104 reaches the filters 214, 216, 218, 220. In some embodiments, multiple filters (e.g., filters 214, 216, 218, 220) may be disposed between the lens array 208 and the optical block 204, each of the filters being associated with a wavelength of the multiple wavelengths of the optical signal 104. For example, the optical signal 104 may be reflected from a surface 230 of the optical block towards filter 214. The lens array 208 may include a respective lens corresponding to each of the filters 214, 216, 218, 220. The lens array 208 may include a lens 209 below the spacer 206 used to collimate the optical signal 104 before the optical signal 104 reaches the filters 214, 216, 218, 220.

Filter 214 may provide an optical signal 232 having a first wavelength (e.g., corresponding to a first one of the wavelengths of the optical signal 104) to the photonic chip, such as the photonic chip 108 described with respect to Figure 1. For example, filter 214 may allow a first optical wavelength (e.g., associated with optical signal 232) of optical signal 104 to propagate to the photonic chip and reflect other optical wavelengths of the optical signal 104 back to the optical block 204. The optical signal 232 may propagate to the photonic chip through the lens array 208, which may focus (e.g., via a lens corresponding to filter 214) the optical signal 232 before reaching an optical interface for the photonic chip. In some aspects, the lens array 208 may include multiple lenses per wavelength (e.g., per filter), one for each fiber in the fiber array 120.

A birefringent crystal allows for polarization splitting or combining of optical signals. In some embodiments, a birefringent crystal 210 and a spacer 212 (e.g., a glass spacer) may be coupled between the lens array 208 and the photonic chip. The optical signal 232 may be provided to the photonic chip through the birefringent crystal 210 and the spacer 212, as shown. The optical signal 232 provided to the birefringent crystal 210 may have an arbitrary polarization. The birefringent crystal may split the polarization of the optical signal 232 and generate optical signals having different polarizations (e.g., having polarizations that are offset by 90°).

Filter 214 may reflect at least a portion of the optical signal 104 back towards surface 230 to be reflected from surface 230 towards filter 216. Similar to filter 214, filter 216 may provide an optical signal 234 having a second wavelength (e.g., corresponding to a second one of the wavelengths of the optical signal 104) to the photonic chip. As shown, the optical signal 234 may be provided to the photonic chip through the birefringent crystal 210 and the spacer 212.

Similarly, filter 216 may reflect at least a portion of the optical signal 104 back towards surface 230 to be reflected from surface 230 to filter 218, providing an optical signal 236 (e.g., having a third one of the wavelengths of the optical signal 104) to the photonic chip through the birefringent crystal 210 and the spacer 212. Filter 218 may reflect at least a portion of the optical signal 104 back towards surface 230 to be reflected from surface 230 to filter 220, providing an optical signal 238 (e.g., having a fourth one of the wavelengths of the optical signal 104) to the photonic chip through the birefringent crystal 210 and the spacer 212.

While four filters are described, any suitable number of filters (e.g., one or more filters) may be used. For example, a single filter may generate a single optical signal with one of the wavelengths of the multi-wavelength optical signal 104, or two filters may be used to generate two optical signals with wavelengths corresponding to respective wavelengths of optical signal 104.

Using the angled facet as described allows for a reduction in the MDM's part count, thus reducing fabrication complexity and cost. Injecting light in the lens array directly (e.g., as opposed to using a separate prism) increases ground clearance of the fiber array and enables easier integration in densely packed electronic environments without increasing MDM height or footprint.

The optical signal should travel a specific optical distance (e.g., a focal distance) between the fiber array (e.g., fiber array 120) and a collimating lens (e.g., lens 209 below spacer 206). Thus, the optical signal 104 travels in the silicon lens array which may have a high-refractive index (e.g., as opposed to some conventional implementations where the optical signal 104 travels through a prism before reaching the lens array). Thus, the lens array may provide a long physical distance for the light to travel. In other words, the angled facet 222 of the lens array 208 may be implemented on a first side of the lens array and the fiber array 120 may be disposed adjacent to a second side of the fiber array opposite the first side. In this manner, the lens array provides the long physical distance for the light to travel to set the focal distance properly. In some embodiments, the angled facet of the lens array may be manufactured by polishing, micro-machining, or etching. Using the angled facet also provides a certain total internal reflection, even if the facet is exposed to water/coolant solution in immersed applications or in the presence of surface contaminations (e.g., from epoxy resin).

In some embodiments, one or more of the wavelength filters may be replaced by optical spacers without wavelength filtering functionality. For instance, filter 220 is the last in the sequence of filters. Filter 220 improves the quality of the optical signal 238 but, in some application, may not need to an optical signal back to surface 230. Replacing this filter with an optical spacer may reduce material costs in applications with less stringent specifications. In alternative scenarios, it may not be desired to separate all wavelengths of the optical signal 104. Replacing one or more filters with optical spacers provides flexibility to select which wavelength combinations are transmitted towards the photonic chip.

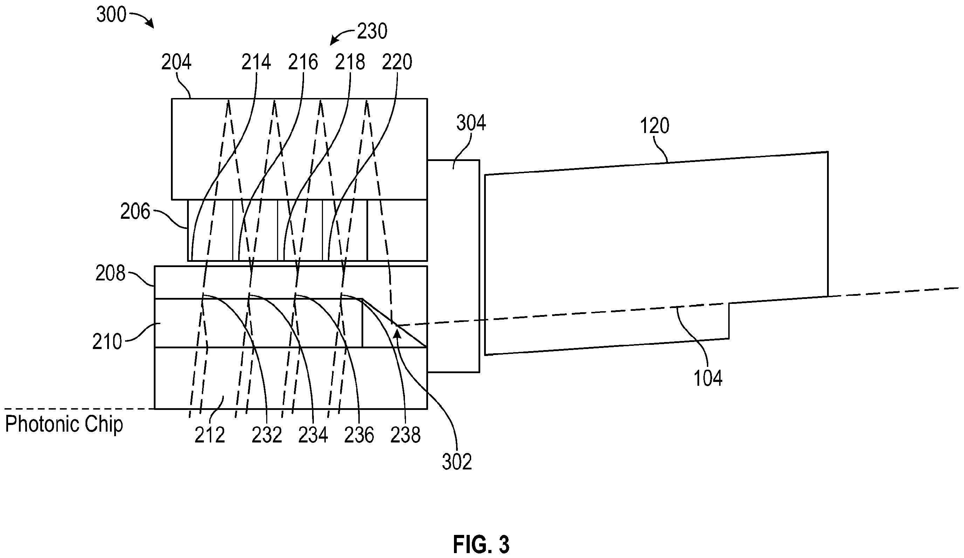

Figure 3 illustrates an example MDM 300 (e.g., corresponding to MDM 106 of Figure 1) with angled facet 302 adjacent to a spacer 304 (e.g., glass spacer), in accordance with certain embodiments of the present disclosure. The angled facet 302 may be placed on a side of the lens array 208 that is close to the fiber array 120. The lens array 208 may be produced by removing a part of the silicon used to implement the lens array 208 (e.g., by etching or micro-machining). As shown, the birefringent crystal 210 may be disposed in a produced cavity of the lens array 208. By placing the birefringent crystal 210 in the cavity, the overall height of the MDM 300 may be reduced (e.g., as compared to an implementation where the birefringent crystal 210 is disposed below the entirety of the lens array 208). As described, the birefringent crystal allows for polarization splitting or combining for optical signals. For instance, as shown in Figure 3, each of the optical signals 232, 234, 236, 238 may be split into two optical signals of different polarizations before being provided to the photonic chip.

In some embodiments, the spacer 304 may be placed between the lens array 208 and the fiber array 120 to achieve a specific focal distance between the lens (e.g., the lens of filter 214) and the fiber array 120. In some cases, instead of using the spacer 304, the lens array 208 may be extended (e.g., elongated) further towards the fiber array to achieve the specific focal distance between the lens and the fiber array 120.

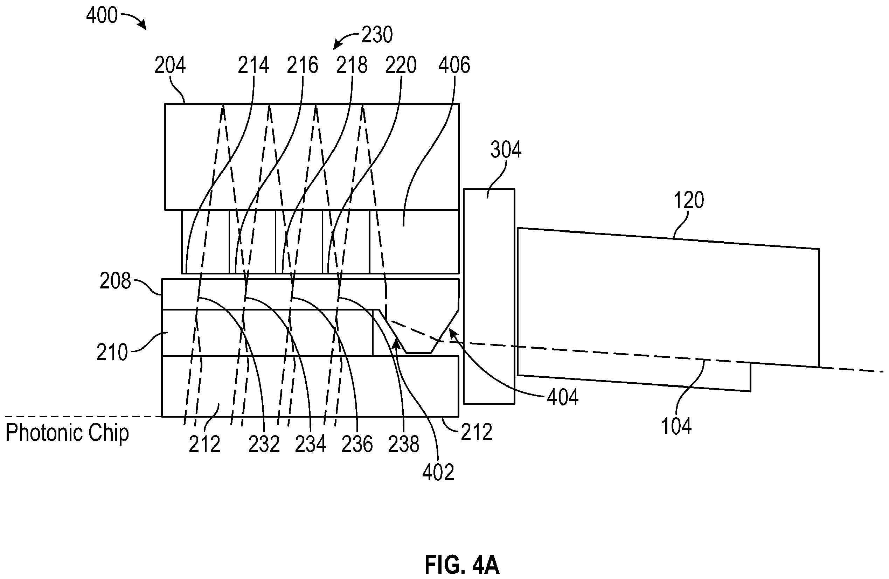

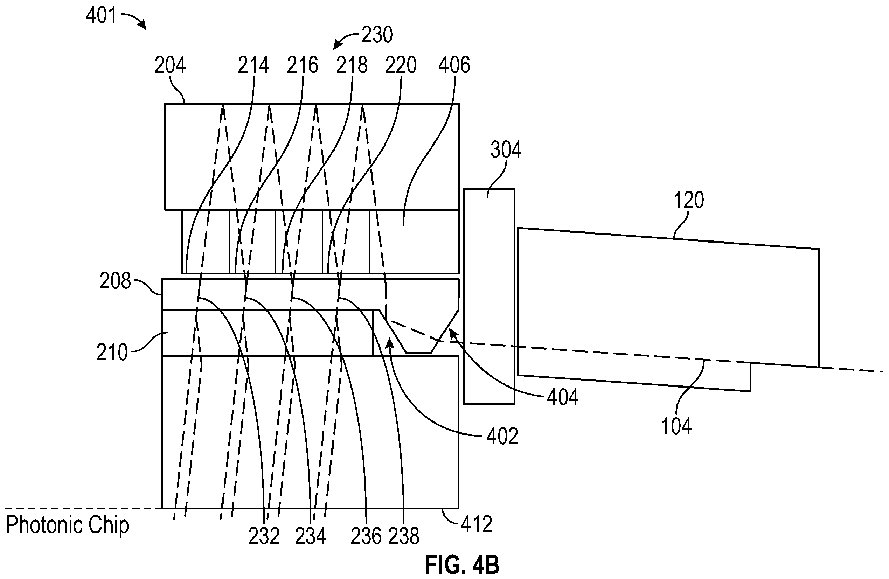

Figure 4A illustrates an example MDM 400 (e.g., corresponding to the MDM 106 of Figure 1) implemented with a lens array 208 having multiple angled facets 402, 404, in accordance with certain embodiments of the present disclosure. As shown, the optical signal 104 may be guided by means of the multiple facets 402, 404, using reflection and/or refraction. In some embodiments, Potassium Hydroxide (KOH) etching of silicon may be used for manufacturing the angled facets 402, 404. In some embodiments, the KOH etching process may generate high-quality angled facets at a specific angle of 54.74° in a cost-effective wafer-level process. As shown, a first facet 402 may be used to reflect the beam and a second facet 404 may be used to refract the beam. For example, a near horizontal beam (e.g., the optical signal from fiber array 120) may be refracted by facet 404 towards facet 402, and facet 402 may reflect the beam to be a near-vertical beam propagating towards the optical block 204 through a spacer 406 (e.g., glass spacer). As shown, the fiber array 120 in Figure 4A may be tilted downwards (e.g., by -4°) (e.g., as opposed to fiber array 120 in Figures. 2 and 3 that are tilted upwards). Thus, in some embodiments, the bottom spacer 212 may be implemented with a thicker silicon spacer, as shown in Figure 4B.

Figure 4B illustrates an example MDM 401 (e.g., corresponding to the MDM 106 of Figure 1) implemented with a lens array 208 having multiple angled facets 402, 404 and a silicon spacer 412, in accordance with certain embodiments of the present disclosure. As shown, the spacer 412 may include materials with a higher refractive index (for instance, high-refractive index glasses, silicon, silicon nitride) as compared to the spacer 212, allowing for an increased height for the spacer to increase the ground clearance of the fiber array while maintaining a specified focal distance for the MDM 401.

While the operations of the MDMs 200, 300, 400, and 401 have been described with respect to wavelengths of an optical signal from the fiber array 120 being separated to facilitate understanding, the MDMs may be used to combine optical signals of different wavelengths into a multi-wavelength optical signal to be provided to the fiber array 120. For example, referring back to Figure 2, optical signals 232, 234, 236, 238 having different wavelengths may be received from the photonic chip. The optical signals 232, 234, 236, 238 may be combined to provide the optical signal 104 to the fiber array 120.

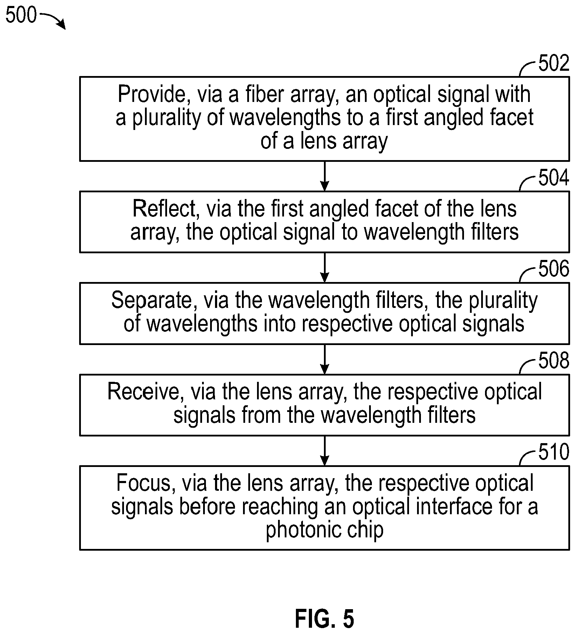

Figure 5 is a flow diagram illustrating example operations 500 for optical signal processing, in accordance with certain embodiments of the present disclosure. The operations 500 may be performed, for example, by an optical assembly such as an MDM (e.g., MDM 200, MDM 300, MDM 400, or MDM 401).

At block 502, the MDM may provide, via a fiber array (e.g., fiber array 120), an optical signal (e.g., optical signal 104) with a plurality of wavelengths to a first angled facet (e.g., facet 222, 302, or 402) of a lens array (e.g., lens array 208). At block 504, the MDM may reflect, via the first angled facet of the lens array, the optical signal to one or more wavelength filters (e.g., wavelength filters 214, 216, 218, 220). In some aspects, the MDM may collimate, via the lens array, the optical signal before reaching the one or more wavelength filters. At block 506, the MDM may separate, via the one or more wavelength filters, the plurality of wavelengths into respective optical signals (e.g., optical signals 232, 234, 236, 238).

At block 508, the MDM may receive, via the lens array, one or more of the respective optical signals from the one or more wavelength filters. At block 510, the MDM may focus, via the lens array, the respective optical signals before reaching an optical interface for a photonic chip (e.g., photonic chip 108).

In some embodiments, the MDM may receive, via an optical block (e.g., optical block 204), the optical signal from the first angled facet. The MDM may reflect, via the optical block, the optical signal to each of the one or more wavelength filters. The one or more wavelength filters may be disposed between the optical block and the lens array.

In some embodiments, the MDM may receive, via a second angled facet (e.g., facet 404) of the lens array, the optical signal from the fiber array. The MDM may provide, via the second angled facet, the optical signal to the first angled facet (e.g., angled facet 402) to be reflected to the one or more wavelength filters.

In some embodiments, a birefringent crystal (e.g., birefringent crystal 210) may be disposed between the lens array and the optical interface. The birefringent crystal may be used to provide, for each of the or more of the respective optical signals, optical polarization signals of different polarizations.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In view of the foregoing, the scope of the present disclosure is determined by the claims that follow.

## Claims

1. An optical assembly comprising:
one or more wavelength filters configured to separate a plurality of wavelengths of an optical signal into respective optical signals; and
a lens array comprising a first angled facet configured to reflect the optical signal to the one or more wavelength filters, wherein the lens array is configured to receive one or more of the respective optical signals from the one or more wavelength filters and focus the one or more of the respective optical signals before reaching an optical interface for a photonic chip.

2. The optical assembly of claim 1, wherein the lens array is a semiconductor lens array comprising a respective lens corresponding to each of the one or more wavelength filters.

3. The optical assembly of any preceding claim, further comprising one or more of:
a birefringent crystal configured to provide, for each of the one or more of the respective optical signals, optical polarization signals of different polarizations;
collimating, via the lens array, the optical signal before reaching the one or more wavelength filters;
an optical block configured to receive the optical signal from the first angled facet and reflect the optical signal to each of the one or more wavelength filters, wherein the one or more wavelength filters are disposed between the optical block and the lens array.

4. The optical assembly of any preceding claim, wherein the lens array is configured such that the optical signal propagates through the lens array and past the one or more wavelength filters before reaching the first angled facet.

5. The optical assembly of any preceding claim, further comprising:
one or more optical spacers configured to provide at least one of the respective optical signals to the lens array.

6. The optical assembly of any preceding claim, wherein a first portion of the lens array that focuses the respective optical signals is thinner than a second portion of the lens array comprising the first angled facet, optionally wherein one or both of:
A) the second portion of the lens array is between the first portion of the lens array and a fiber array;
B) the second portion of the lens array comprises a second angled facet configured to receive the optical signal from a fiber array.

7. The optical assembly of any preceding claim, wherein the first angled facet is formed using a Potassium Hydroxide (KOH) etching process.

8. The optical assembly of any preceding claim, further comprising:
a bottom spacer disposed between the optical interface for the photonic chip and the lens array.

9. An optical assembly, comprising:
a lens array having a first portion and a second portion, wherein the second portion includes a first angled facet;
an optical block; and
one or more wavelength filters disposed between the optical block and the first portion of the lens array.

10. The optical assembly of claim 9, further comprising a spacer disposed between the second portion of the lens array and an optical interface for a photonic chip.

11. The optical assembly of claim 9 or 10, wherein the lens array is a semiconductor lens array comprising a respective lens disposed adjacent to each of the one or more wavelength filters, optionally wherein one or both of:
A) the first portion of the lens array is thinner than the second portion of the lens array, and wherein the second portion of the lens array is between the first portion of the lens array and a fiber array;
B) the second portion of the lens array comprises at least a second angled facet.

12. A method for optical signal processing comprising:
providing, via a fiber array, an optical signal with a plurality of wavelengths to a first angled facet of a lens array;
reflecting, via the first angled facet of the lens array, the optical signal to one or more wavelength filters;
separating, via the one or more wavelength filters, the plurality of wavelengths into respective optical signals;
receiving, via the lens array, one or more of the respective optical signals from the one or more wavelength filters; and
focusing, via the lens array, the one or more of the respective optical signals before reaching an optical interface for a photonic chip.

13. The method of claim 12, further comprising:
receiving, via an optical block, the optical signal from the first angled facet; and
reflecting, via the optical block, the optical signal to each of the one or more wavelength filters, wherein the one or more wavelength filters are disposed between the optical block and the lens array.

14. The method of claim 13, further comprising:
receiving, via a second angled facet of the lens array, the optical signal from the fiber array; and
providing, via the second angled facet, the optical signal to the first angled facet to be reflected to the one or more wavelength filters.
